# EUROPÄISCHE PATENTSCHRIFT

(11) **EP 3 344 496 B1**
(45) Veröffentlichungstag und Bekanntmachung des Hinweises auf die Patenterteilung: **08.04.2020**
(21) Anmeldenummer: 16751603.8
(22) Anmeldetag: 16.08.2016
(51) Int. Cl.: B60R 1/04

(54) **INNENSPIEGELSOCKELANORDNUNG FÜR EIN KRAFTFAHRZEUG**
INTERIOR MIRROR BASE ARRANGEMENT FOR A MOTOR VEHICLE
ENSEMBLE SOCLE DE RÉTROVISEUR INTÉRIEUR POUR VÉHICULE À MOTEUR

(30) Priorität: 04.09.2015 DE 102015216999
(43) Veröffentlichungstag der Anmeldung: 11.07.2018
(73) Patentinhaber: Bayerische Motoren Werke Aktiengesellschaft, 80809 München (DE)
(72) Erfinder: ASANG, Peter, 82547 Eurasburg (DE)
(86) Internationale Anmeldenummer: PCT/EP2016/069424
(87) Internationale Veröffentlichungsnummer: WO 2017/036790

(56) Entgegenhaltungen:
- DE-A1- 19 530 617
- DE-A1-102011 108 392
- US-A1- 2007 091 626
- US-A1- 2013 229 522

## Beschreibung

Die vorliegende Erfindung bezieht sich auf eine Innenspiegelsockelanordnung für ein Kraftfahrzeug mit einem Sockel für einen Innenspiegel, der benachbart zu einer Dachverkleidung an einer Frontscheibe des Kraftfahrzeugs fest fixierbar ist.

Aus der DE 102006009318 A1 ist eine Halteeinrichtung für einen Innenspiegel eines Fahrzeugs bekannt. Die Halteeinrichtung ist an einer Innenseite einer Windschutzscheibe des Kraftfahrzeugs angeklebt. Ferner ist an der Halteeinrichtung ein optischer Sensor befestigt, mit dem ein Abstand, eine Geschwindigkeit und eine Richtung eines sich dem Fahrzeug nähernden Objekts ermittelt werden kann. Die Halteeinrichtung weist ferner eine Befestigung für den Innenspiegel auf. Darüber hinaus ist eine mehrteilige Abdeckung vorgesehen, die formschlüssig an der Windschutzscheibe anliegt.

Es besteht das Problem, dass, wenn die Abdeckung angrenzend zu einem Dachhimmel ausgebildet ist, ein Spalt zwischen der Abdeckung und dem Dachhimmel sichtbar ist, der aufgrund der Maßtoleranzen eines Dachhimmels, bzw. der Frontscheibe, die fest mit einer Karosserie verbunden ist, mal mehr mal weniger groß ausfallen kann und eine wertige Erscheinung dieses Bereiches beeinträchtigen kann.

Daher ist es die Aufgabe der vorliegenden Erfindung, eine Innenspiegelsockelanordnung für ein Kraftfahrzeug zu schaffen, bei der ein für einen Fahrzeuginsassen sichtbarer Spalt zwischen einem Innenspiegelsockel und einer Dachverkleidung zuverlässig verringert ist.

Diese Aufgabe wird durch eine Innenspiegelsockelanordnung gelöst, die die Merkmale von Patentanspruch 1 aufweist. Insbesondere hat eine Innenspiegelsockelanordnung für ein Kraftfahrzeug einen Sockel für einen Innenspiegel, der benachbart zu einer Dachverkleidung an einer Frontscheibe des Kraftfahrzeugs fest fixierbar ist, ein Blendenelement, das beweglich an dem Sockel gelagert ist, und ein Befestigungsmittel, mit dem das Blendenelement an der Dachverkleidung befestigbar ist.

Durch die Befestigung des Blendenelements an der Dachverkleidung ist es möglich, einen Spalt zwischen dem Blendenelement und der Dachverkleidung zu minimieren oder auch die Größe eines vorgegebenen Spaltes sicherzustellen. Ferner ermöglicht die bewegliche Lagerung des Blendenelements, dass das Blendenelement angrenzend zu der Dachverkleidungunabhängig von einer Position des Sockels an der Frontscheibe bzw. unabhängig von einer Relativposition von Dachverkleidung, Karosserie, Frontscheibe und Sockel anordenbar ist.

Das Kraftfahrzeug kann ein Personenkraftfahrzeug sein. Für den Ausdruck Dachverkleidung kann auch der Ausdruck Dachhimmel verwendet werden.

Gemäß einer bevorzugten Weiterbildung der Innenspiegelsockelanordnung sind ein der Dachverkleidung gegenüber liegender Endabschnitt des Blendenelements und das Befestigungsmittel derart ausgebildet, dass das Blendenelement mit der Dachverkleidung im Wesentlichen ohne von einem Fahrzeuginsassen sichtbaren Spalt in Kontakt ist. Insbesondere sind eine Außenkontur der Dachverkleidung und eine Außenkontur des Blendenelements zueinander passend ausgebildet. Mit Fahrzeuginsassen sind insbesondere auf einer vorderen Sitzreihe sitzende Personen gemeint, aus deren Blickwinkel kein Spalt sichtbar sein sollte, so dass die Innenspiegelsockelanordnung ein hochwertiges Erscheinungsbild abgibt.

Gemäß einer weiteren bevorzugten Weiterbildung der erfindungsgemäßen Innenspiegelsockelanordnung hat das Befestigungsmittel zumindest ein Rastelement, mittels dem das Blendenelement und die Dachverkleidung miteinander verrasttbar sind.

Ein Rastelement ist insbesondere bei einer Montage von Vorteil und kann eine dauerhafte Verbindung zwischen dem Blendenelement und der Dachverkleidung sicherstellen.

Es können auch mehrere Rastelemente als Befestigungsmittel verwendet sein.

Besonders bevorzugt ist das Befestigungsmittel angepasst, das Blendenelement elastisch gegen die Dachverkleidung vorzuspannen.

Hierdurch ist es besonders einfach sichergestellt, dass das Blendenelement und die Dachverkleidung miteinander in Kontakt bleiben und kein sichtbarer Spalt entsteht. Hierfür kann als Befestigungsmittel ein Federelement verwendet sein. Ebenso können Federelement und Rastelement als Befestigungsmittel miteinander kombiniert sein.

Bevorzugt ist das Blendenelement in Fahrzeuglängsrichtung verschiebbar. Ferner ist das Blendenelement bevorzugt in eine Fahrzeughochrichtung verschiebbar. Ebenso kann das Blendenelement derart gelagert sein, dass es in eine Fahrzeuglängsrichtung und eine Fahrzeughochrichtung verschiebbar ist, so dass es resultierend auch in alle Richtungen zwischen einer Fahrzeuglängsrichtung und einer Fahrzeughochrichtung verschiebbar ist.

Zusätzlich oder alternativ kann das Blendenelement um eine Schwenkachse, die parallel zu einer Fahrzeugquerrichtung verläuft, schwenkbar an dem Sockel gelagert sein. Bei der Schwenkachse kann es sich um eine tatsächliche, d.h. reelle, oder eine virtuelle Schwenkachse handeln.

Durch die vorstehend beschriebene verschiebbare bzw. schwenkbare Lagerung können Maßtoleranzen des Fahrzeughimmels bzw. der Fahrzeugkarosserie und der Frontscheibe besonders wirksam ausgeglichen werden, da ein Bereich, in dem der Dachhimmel und das Klemmelement aneinander angrenzen, im Wesentlichen in Fahrzeugquerrichtung verläuft.

Gemäß einer weiteren bevorzugten Weiterbildung der vorliegenden Erfindung ist die Lagerung des Blendenelements an dem Sockel über zumindest einen Aufnahmeschuh ausgebildet, der entweder an dem Blendenelement oder an dem Sockel ausgebildet ist und in dem ein Einschubabschnitt des jeweils anderen Elements von dem Blendenelement und dem Sockel beweglich aufgenommen ist.

Der Aufnahmeschuh ist dabei bevorzugt an einer von der Dachverkleidung entgegengesetzten Seite des Blendenelements angeordnet.

Durch den Aufnahmeschuh und den Einschubabschnitt kann eine verschiebbare und/oder schwenkbare Lagerung des Blendenelements besonders einfach verwirklicht werden.

Bevorzugt weist dabei der Aufnahmeschuh einen elastischen Schenkel auf, der gegen den Einschubabschnitt elastisch vorgespannt ist.

Durch die elastische Vorspannung des Schenkels ist das Blendenelement fest bzw. spielfrei an dem Sockel lagerbar, so dass ein Bewegen des Blendenelements nach der Befestigung an der Dachverkleidung unterbunden ist und Klappergeräusche oder dergleichen vermieden sind.

Bevorzugt weist der Sockel eine starr, das heißt fest bzw. unbeweglich, mit dem Sockel verbundene oder integral mit dem Sockel ausgebildete Sockelblende auf, wobei das beweglich gelagerte Blendenelement und die Sockelblende einander überlappen und insbesondere in dem Überlappungsbereich komplementär zueinander ausgebildet sind.

Mit anderen Worten sind das Blendenelement und die Sockelblende als zueinander passende Schalen ausgebildet, die entsprechend des vorgegebenen Bewegungsspielraums des Blendenelements gegeneinander verschiebbar sind.

Gemäß einer bevorzugten Weiterbildung der Innenspiegelsockelanordnung mit der Sockelblende sind das Blendenelement und die Sockelblende derart komplementär zueinander ausgebildet und überlappen einander derart, dass in verschiedenen Positionen das beweglich gelagerten Blendenelements für einen Fahrzeuginsassen im Wesentlichen kein Spalt zwischen dem Blendenelement und der Sockelblende sichtbar ist. Dies bedeutet nicht, dass kein Spalt zwischen dem Blendenelement und der Sockelblende vorhanden ist, aber zumindest sind Biendenelement und Sockelblende derart ausgebildet, dass der Spalt aus dem Blickwinkel eines Fahrzeuginsassen nicht sichtbar ist.

Gemäß einer bevorzugten Weiterbildung der Innenspiegelsockelanordnung ist unter bzw. hinter dem Blendenelement zumindest eine elektronische Vorrichtung angeordnet. Die elektronische Vorrichtung kann beispielsweise eine optische Sensorik, beispielsweise eine Kamera, umfassen.

Vorstehend beschriebene Weiterbildungen der Erfindung sind soweit möglich und sinnvoll beliebig miteinander kombinierbar.

Es folgt eine Kurzbeschreibung der Figuren.
- Figur 1: ist eine schematische Perspektivansicht einer Innenspiegelsockelanordnung gemäß einem Ausführungsbeispiel der vorliegenden Erfindung.
- Figur 2: ist eine schematische Schnittansicht der Innenspiegelsockelanordnung gemäß dem Ausführungsbeispiel der vorliegenden Erfindung entlang einer Ebene A-A in Fahrzeuglängsrichtung.
- Figur 3: ist eine schematische Schnittansicht der Innenspiegelsockelanordnung gemäß dem Ausführungsbeispiel der vorliegenden Erfindung entlang einer Ebene B-B in Fahrzeugquerrichtung.
- Figur 4: ist eine schematische Perspektivansicht einer Unterseite eines Blendenelements der Innenspiegelsockelanordnung gemäß dem Ausführungsbeispiel der vorliegenden Erfindung.

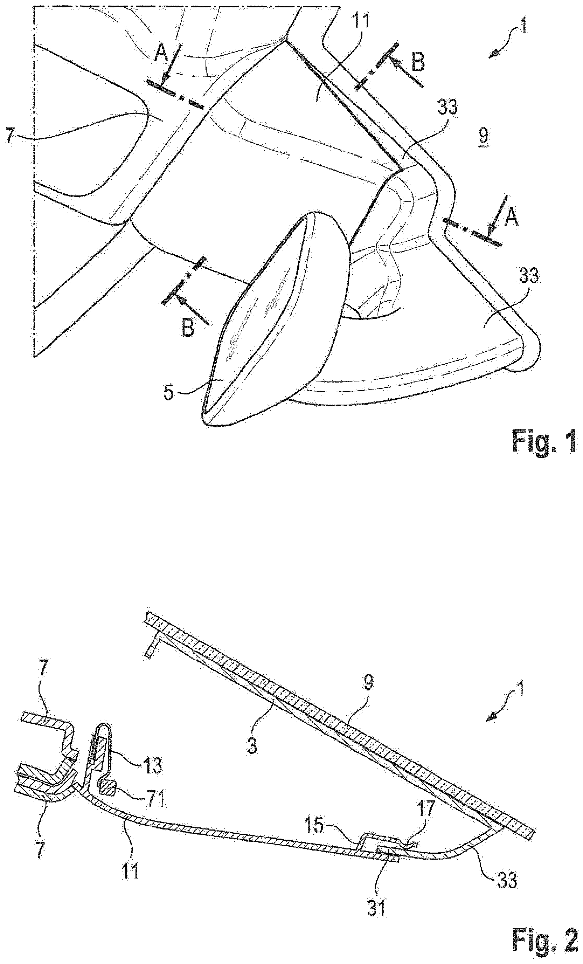

Es folgt eine detaillierte Beschreibung eines Ausführungsbeispiels der vorliegenden Erfindung unter Bezugnahme auf Figuren 1 bis 4.

Wie in Figur 1 gezeigt ist, hat eine Innenspiegelsockelanordnung 1 gemäß dem Ausführungsbeispiel der vorliegenden Erfindung einen Sockel 3, an dem ein Innenspiegel 5 gelenkig gelagert ist. Der Sockel 3 ist benachbart zu einer Dachverkleidung 7 an einer Frontscheibe 9 des Kraftfahrzeugs fest fixiert, d.h. mit dieser verklebt. Der Sockel 3 kann auch mehrteilig mit einem Element, das an der Frontscheibe 9 fixiert ist und einem weiteren Element, das an dem einen Element befestigt ist und als Gehäuse ausgebildet ist. Ferner weist die Innenspiegelsockelanordnung 1 ein Blendenelement 11 auf, das an dem Sockel 3 gelagert ist und an der Dachverkleidung 7, insbesondere einem vorderen Endabschnitt der Dachverkleidung 7, angrenzt. Sowohl die Dachverkleidung 7 als auch die Frontscheibe 9 sind an einer Karosserie des Kraftfahrzeugs befestigt. Die Dachverkleidung 7 kann mehrteilig, sandwichartig, beispielsweise mit einem vom Fahrgastraum aus sichtbaren Himmelelement aus einem Textil, einem Grundelement und einem Trägerrahmen, aufgebaut sein. Der Endabschnitt der Dachverkleidung 7 ist vom Fahrgastraum aus sichtbar und im Bereich eines oberen Abschnitts der Frontscheibe 9 ausgebildet.

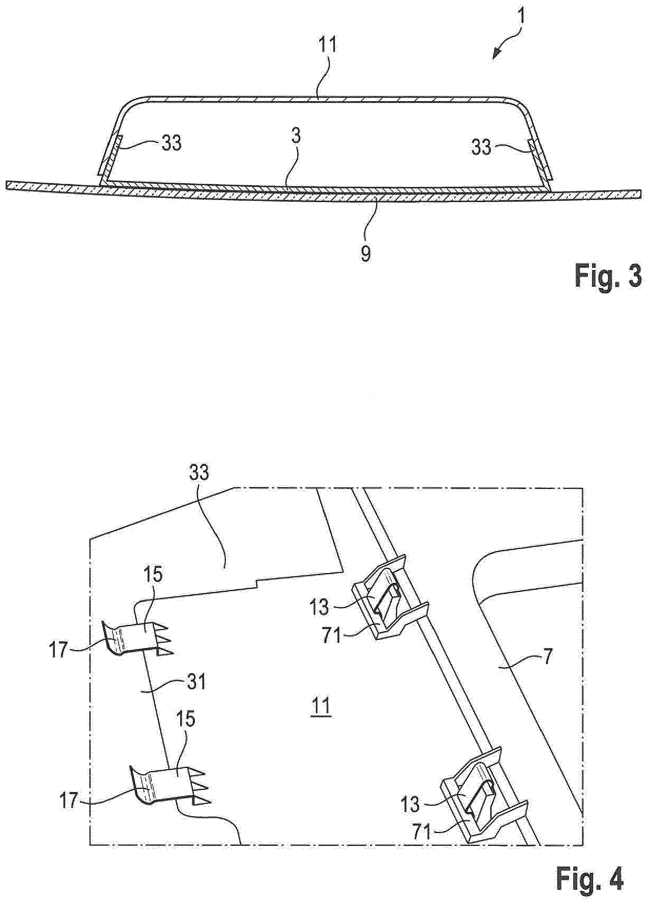

Eine Lagerung und Befestigung des Blendenelements 11 ist in den in Figuren 2 und 3 gezeigten Schnittansichten sowie der in Figur 4 gezeigten Perspektivansicht besser ersichtlich. Wie in Figur 2 gezeigt ist, ist das Blendenelement 11 mittels einer Federklammer 13 mit der Dachverkleidung 7 verrastet und elastisch gegen die Dachverkleidung 7 vorgespannt. Die Federklammer 13 ist in einem Federsockel des Blendenelements 11 befestigt. Ein freies Ende der Federklammer 13 greift in eine Lasche 71, die an einem Rahmenelement des Blendenelements 11 ausgebildet ist, ein und drückt hierdurch das Blendenelement 11 gegen den Endabschnitt der Dachverkleidung 7. Ein hinterer Endabschnitt des Blendenelements 11 grenzt dabei formschlüssig, d.h. im Wesentlichen spaltfrei an den vorderen Endabschnitt der Dachverkleidung 7 an. Die Außenkontur der Dachverkleidung 7 und des Blendenelements 11 sind dementsprechend aneinander angepasst. Dabei ist insbesondere für einen Fahrzeuginsassen vom Fahrgastraum aus kein sichtbarer Spalt zwischen der Dachverkleidung 7 und dem Blendenelement 11 erkennbar.

Ferner ist das Blendenelement 11 über einen integral mit dem Blendenelement 11 ausgebildeten Aufnahmeschuh 15 beweglich an dem Sockel 3, das heißt insbesondere einer Sockelblende 33 des Sockels 3, verbunden. Die Sockelblende 33 bildet eine an die Frontscheibe 9 angrenzende Außenwand des Sockels 3. Der Aufnahmeschuh 15 des Blendenelements 11 ist über einen Randabschnitt 31 der Sockelblende 33 geschoben. Der Aufnahmeschuh 15 weist einen elastischen Schenkel 17 auf, wodurch der Randabschnitt 31 der Sockelblende 33 spielfrei in dem Aufnahmeschuh 15 gelagert ist. Über den Aufnahmeschuh 15 ist das Blendenelement 11 gegenüber der Sockelblende 33 in gewissen vorgegebenen Grenzen verschiebbar und auch schwenkbar gelagert. Hierdurch ist es möglich fertigungsbedingte Toleranzen zwischen der Dachverkleidung 7, der Fahrzeugkarosserie und der Frontscheibe 9 auszugleichen. Der Aufnahmeschuh 15 ist an einem zu der Dachverkleidung 7 entgegengesetzten Ende des Blendenelements 11 ausgebildet. Es können auch mehrere Aufnahmeschuhe 15 an dem Blendenelement 11 vorgesehen sein, wie in Figur 4 gezeigt ist.

In Fahrzeugquerrichtung überlappen sich entsprechende zueinander komplementäre Abschnitte der Sockelblende 33 und des Blendenelements 11, wie in Figur 3 gezeigt ist. Insbesondere überlappt das Blendenelement 11 die Sockelblende 33, so dass ein gegebenenfalls zwischen der Sockelblende 33 und dem Blendenelement 11 vorhandener Spalt aus Sicht des Fahrzeuginsassen nicht sichtbar ist.

Insgesamt ist durch die erfindungsgemäße Innenspiegelsockelanordnung 1 mit dem an der Dachverkleidung 7 befestigten Blendenelement 11 und der beweglichen Lagerung des Blendenelements 11 an dem Sockel 3 bzw. an der Sockelblende 33 eine von engen Fertigungstoleranzen unabhängige Innenspiegelanordnung ermöglicht, wobei der Abschnitt zwischen dem Blendenelement 11 und dem angrenzenden Dachhimmel 7 im Wesentlichen ohne sichtbaren Spalt ausgebildet ist.

Unter der Sockelblende 33 bzw. unter dem Blendenelement 11 können verschiedene elektronische Vorrichtungen angeordnet sein, wie beispielsweise eine optische Sensorik, zur Erfassung von Regen, Licht und weiterer für Fahrerassistenzsysteme notwendiger Parameter. Insbesondere kann die Sensorik eine Kamera umfassen.

## Patentansprüche

1. Innenspiegelsockelanordnung (1) für ein Kraftfahrzeug, insbesondere ein Personenkraftfahrzeug, mit einem Sockel (3, 33) für einen Innenspiegel (5), der benachbart zu einer Dachverkleidung (7) an einer Frontscheibe (9) des Kraftfahrzeugs fest fixierbar ist, einem Blendenelement (11), das beweglich an dem Sockel (3, 33) gelagert ist, und einem Befestigungsmittel (13), mit dem das Blendenelement (11) an der Dachverkleidung (7) befestigbar ist,
**dadurch gekennzeichnet, dass**
das Blendenelement (11) in Fahrzeuglängsrichtung und in Fahrzeughochrichtung verschiebbar ist, sodass es resultierend in alle Richtungen zwischen Fahrzeuglängsrichtung und einer Fahrzeughochrichtung verschiebbar ist, und/oder das Blendenelement (11) um eine Schwenkachse, die parallel zu einer Fahrzeugquerrichtung verläuft, schwenkbar an dem Sockel (3, 33) gelagert ist.

2. Innenspiegelsockelanordnung nach Patentanspruch 1, wobei ein der Dachverkleidung (7) gegenüberliegender Endabschnitt des Blendenelements (11) und das Befestigungsmittel (13) derart ausgebildet sind, dass das Blendenelement (11) mit der Dachverkleidung (7) im Wesentlichen ohne von einem Fahrzeuginsassen sichtbaren Spalt in Kontakt ist.

3. Innenspiegelsockelanordnung nach Patentanspruch 1 oder 2, wobei das Befestigungsmittel (13) zumindest ein Rastelement aufweist, mittels dem das Blendenelement (11) und die Dachverkleidung (7) miteinander verrastbar sind.

4. Innenspiegelsockelanordnung nach einem der Patentansprüche 1 bis 3, wobei das Befestigungsmittel (13) angepasst ist, das Blendenelement (11) elastisch gegen die Dachverkleidung (7) vorzuspannen.

5. Innenspiegelsockelanordnung nach einem der Patentansprüche 1 bis 4, wobei die Lagerung des Blendenelements (11) an dem Sockel (3, 33) über zumindest einen Aufnahmeschuh (15) ausgebildet ist, der entweder an dem Blendenelement (11) oder an dem Sockel (3, 33) ausgebildet ist und in dem ein Einschubabschnitt (31) des jeweils anderen Elements von dem Blendenelement (11) und dem Sockel (3) beweglich aufgenommen ist.

6. Innenspiegelsockelanordnung nach Patentanspruch 5, wobei der Aufnahmeschuh (15) einen elastischen Schenkel (17) aufweist, der gegen den Einschubabschnitt (31) elastisch vorgespannt ist.

7. Innenspiegelsockelanordnung nach einem der Patentansprüche 1 bis 6, wobei der Sockel (3) eine starr mit dem Sockel (3) verbundene oder integral dem Sockel (3) ausgebildete Sockelblende (33) aufweist, wobei das beweglich gelagerte Blendenelement (11) und die Sockelblende (33) einander überlappen und insbesondere in dem Überlappungsbereich komplementär zueinander ausgebildet sind.

8. Innenspiegelsockelanordnung nach Patentanspruch 7, wobei das Blendeelement (11) und die Sockelblende (33) derart komplementär zueinander ausgebildet sind und einander derart überlappen, dass in verschiedenen Positionen des beweglich gelagerten Blendenelements (11) für einen Fahrzeuginsassen im Wesentlichen kein Spalt zwischen dem Blendenelement (11) und der Sockelblende (33) sichtbar ist.

9. Innenspiegelsockelanordnung nach einem der Patentansprüche 1 bis 8, wobei unter dem Blendenelement (11) zumindest eine elektronische Vorrichtungen, insbesondere eine Sensorik, angeordnet ist.

## Claims

1. An internal mirror base assembly (1) for a motor vehicle, in particular a passenger vehicle, with a base (3, 33) for an interior mirror (5) which can be firmly fixed next to a roof panel (7) on a windshield (9) of the motor vehicle, a shutter element (11), which is moveably mounted on the base (3, 33), and a fastening means (13), with which the shutter element (11) on the roof panel (7) can be fastened, **characterised in that**
the shutter element (11) is displaceable in a vehicle longitudinal direction and in a vehicle vertical direction, meaning it can be displaced in all directions between a vehicle longitudinal direction and a vehicle vertical direction as a result, and/or the shutter element (11) is mounted pivotably on the base (3, 33) about a pivot axis that runs parallel to a vehicle transverse direction.

2. An internal mirror base assembly according to Claim 1, wherein an end portion of the shutter element (11) situated opposite the roof panel (7) and the fastening means (13) are designed such that the shutter element (11) is in contact with the roof panel (7) without a gap substantially visible to the vehicle occupant.

3. An internal mirror base assembly according to Claim 1 or 2, wherein the fastening means (13) has at least one latching element by means of which the shutter element (11) and the roof panel (7) can be latched together.

4. An internal mirror base assembly according to one of Claims 1 to 3, wherein the fastening means (13) is adapted to elastically prestress the shutter element (11) against the roof panel (7).

5. An internal mirror base assembly according to one of Claims 1 to 4, wherein the mounting of the shutter element (11) is formed on the base (3, 33) via at least one receiving shoe (15) which is formed either on the shutter element (11) or on the base (3, 33) and in which an insertion portion (31) of the respective other element is moveably received by the shutter element (11) and the base (3).

6. An internal mirror base assembly according to Claim 5, wherein the receiving shoe (15) has an elastic leg (17) that is elastically prestressed against the insertion portion (31).

7. An internal mirror base assembly according to one of Claims 1 to 6, wherein the base (3) has a base shutter (33) rigidly connected to the base (3) or formed integrally with the base (3), wherein the moveably mounted shutter element (11) and the base shutter (33) overlap one another and are formed complementary to one another, in particular in the overlap region.

8. An internal mirror base assembly according to Claim 7, wherein the shutter element (11) and the base shutter (33) are formed to complement one another and overlap one another such that, in different positions of the moveably mounted shutter element (11), a gap between the shutter element (11) and the base shutter (33) is not substantially visible to a vehicle occupant.

9. An internal mirror base assembly according to one of Claims 1 to 8, wherein at least one electronic device, in particular a sensor system, is arranged below the shutter element (11).

## Revendications

1. Agencement d'embase de rétroviseur (1) destiné à un véhicule automobile, en particulier à un véhicule automobile de tourisme comprenant une embase (3, 33) destinée à un rétroviseur (5) qui peut être fixée solidairement sur le pare-brise (9) du véhicule à proximité d'un habillage de plafond (7), un élément pare-soleil (11) qui est monté mobile sur l'embase (3, 33) et un moyen de fixation (13) par lequel l'élément pare-soleil (11) peut être fixé sur l'habillage de toit (7),
**caractérisé en ce que**
l'élément pare-soleil (11) peut être déplacé par translation dans la direction longitudinale du véhicule et dans la direction de la hauteur du véhicule de sorte qu'il puisse ainsi être déplacé par translation dans toutes les directions entre la direction longitudinale du véhicule et la direction de la hauteur du véhicule, et/ou l'élément pare-soleil (11) est monté pivotant sur l'embrase (3, 33) autour d'un axe de pivotement qui s'étend parallèlement à la direction transversale du véhicule.

2. Agencement d'embase de rétroviseur conforme à la revendication 1, dans lequel le segment d'extrémité de l'élément pare-soleil (11) situé à l'opposé de l'habillage de plafond (7) et le moyen de fixation (13) sont réalisés de sorte que l'élément pare-soleil (11) puisse être mis en contact avec l'habillage de plafond (7) essentiellement sans fente visible par un passager du véhicule.

3. Agencement d'embase de rétroviseur conforme à la revendication 1 ou 2,
dans lequel le moyen de fixation (13) comporte au moins un élément d'encliquetage au moyen duquel l'élément pare-soleil (11) et l'habillage de plafond (7) peuvent être encliquetés.

4. Agencement d'embase de rétroviseur conforme à l'une des revendications 1 à 3,
dans lequel le moyen de fixation (13) est adapté pour permettre de pré-contraindre élastiquement l'élément pare-soleil (11) contre l'habillage de plafond (7).

5. Agencement d'embase de rétroviseur conforme à l'une des revendications 1 à 4,
dans lequel le montage de l'élément pare-soleil (11) sur l'embase (3, 33) est réalisé par l'intermédiaire d'au moins une semelle de réception (15) qui est formée soit sur l'élément pare-soleil (11), soit sur l'embase (3, 33) et dans laquelle est logé un segment d'insertion (31) de l'autre élément respectif parmi l'élément pare-soleil (11) et l'embase (3).

6. Agencement d'embase de rétroviseur conforme à la revendication 5,
dans lequel la semelle de réception (15) comporte une branche élastique (17) qui est élastiquement précontrainte contre le segment d'insertion (31).

7. Agencement d'embase de rétroviseur conforme à l'une des revendications 1 à 6,
dans lequel l'embase (3) comporte un pare-soleil d'embase (33) relié solidairement à l'embase (3) ou faisant partie intégrante de cette embase (3), l'élément pare-soleil (11) monté mobile et le pare-soleil d'embase (33) se chevauchant, et étant, en particulier, réalisés de façon complémentaire l'un à l'autre dans la zone de chevauchement.

8. Agencement d'embase de rétroviseur conforme à la revendication 7, dans lequel l'élément pare-soleil (11) et le pare-soleil d'embase (33) sont formés de façon complémentaire l'un à l'autre et se chevauchent de sorte que dans différentes positions de l'élément pare-soleil (11) monté mobile, essentiellement aucune fente ne soit visible entre l'élément pare-soleil (11) et le pare-soleil d'embase (33) pour un occupant du véhicule.

9. Agencement d'embase de rétroviseur conforme à l'une des revendications 1 à 8,
dans lequel au-dessous de l'élément pare-soleil (11) est installé au moins un dispositif électronique, en particulier, un système de capteurs.
